# EUROPEAN PATENT SPECIFICATION

(11) **EP 1 409 188 B1**
(45) Date of publication and mention of the grant of the patent: **12.03.2008**
(21) Application number: 01998424.4
(22) Date of filing: 03.12.2001
(51) Int. Cl.: B23K 9/10

(54) **DEVICE FOR CONTROLLING THE COOLING POWER OF A COOLING APPARATUS**
VORRICHTUNG ZUR STEUERUNG DER KÜHLLEISTUNG EINER KÜHLVORRICHTUNG
DISPOSITIF PERMETTANT DE COMMANDER LA PUISSANCE DE REFROIDISSEMENT D'UN APPAREIL DE REFROIDISSEMENT

(30) Priority: 01.12.2000 SE 0004444
(43) Date of publication of application: 21.04.2004
(73) Proprietor: Esab AB, 402 77 Göteborg (SE)
(72) Inventor: LANDMARK, Ake, S-695 30 LAXA (SE)
(74) Representative: Berglund, Stefan
(86) International application number: PCT/SE2001/002662
(87) International publication number: WO 2002/043914

(56) References cited:
- WO-A1-00/44523
- US-A- 5 811 674

## Description

### Technical field

The present invention relates to an arrangement for controlling the cooling output from a cooling unit, and also to a cooling unit, an apparatus, a welding current source, and a wire feeder mechanism comprising such an arrangement.

### Background

For a cooling unit which can be used alternately by different tools which can be attached to this unit and have mutually different cooling requirements, there is a need to be able to adapt the cooling outpu<t to the requirement of the tool which has just been coupled. This requirement may be due to temperature criteria critical for the process in which the tool is used. Other reasons for this requirement can include the working environment, where the noise level is to be minimized, or aspects of purely operational economy, where the aim is to increase the useful life of the apparatus. To illustrate the discussion, we take the example of a welding machine for electric arc welding:

In gas-metal arc welding, hereinafter referred to as MIG/MAG welding, the apparatus consists inter alia of a welding current source and wire feeder mechanism and also of a welding burner which can be attached to the current source and/or the wire feeder mechanism via a welding cable belonging to the burner. In addition, there is often also a cooling unit for cooling the welding burner and the welding cable belonging to the latter. The purpose of this cooling unit is to generate a forced cooling of welding cable and/or welding burner.

The welding cable which leads the welding current to the welding burner needs to be made small in order to permit maximum accessibility and mobility of the welding burner and to reduce the burden on the welder. On the other hand, the cable needs to be dimensioned for low voltage drop in order to avoid excessive heat development in it, given the often high currents used in MIG/MAG welding. This conflict is often resolved by having the welding cable surround the cooling tube which transports coolant between cooling unit and welding burner. The welding burner requires forced cooling when welding is carried out with great energy developed in the arc.

When welding is carried out with low currents and/or with low intermittence, i.e. with long intervals between the arc periods, use can often be made of a self-cooled welding burner, i.e. a burner which is cooled only by the surrounding air and protective gas flowing through it. Since a welding burner of this kind is lighter and smaller, these welding burners are preferred both for reasons of accessibility during the welding work in confined spaces and for reasons of comfort, since the burner and also the welding cable, which then does not need to contain cooling tubes, is lighter and reduces the risk of stress injuries to the welder.

From what has been stated above, it will be evident that situations can often arise where one and the same set-up of welding current source/wire feeder mechanism is alternately used for welding with a self-cooled burner and for welding with a burner with forced cooling.

Connection of the cooling tubes to the current source or wire feeder mechanism for supplying or returning coolant is often done with the aid of quick-couplings with automatic stops to prevent the cooling medium from leaking out upon coupling or uncoupling of the tubes. Upon uncoupling of the tubes, the cooling pump will thus work against these stops and there is no circulation of the coolant. The pump is not normally dimensioned to work under such conditions. Some manufacturers therefore also supply a connection device for directly coupling together the two tube attachments on the current source or wire feeder mechanism in order to maintain the circulation even when the welding burner is not attached to the coolant circuit. A problem with this solution is that an additional attachment maneuver has to be performed upon each coupling and uncoupling of the cooling tubes. In addition, there is a risk of the small connection device being lost. A further problem is that the cooling pump will work the whole time regardless of whether the cooling output is needed or not. This leads to unnecessary wear on the pump and also to irritating and unnecessarily high noise levels.

Another solution to the problem is one in which a manual circuit breaker for the coolant pump has to be switched off when a welding burner of the self-cooled type is used. This affords advantages over the previous solution as regards wear and noise levels. However, the solution entails a risk that the pump will, through an oversight, not be restarted upon coupling_of a cooled welding burner. This can then lead to the burner failing on account of overheating.

A third solution is based on a flow monitor in the coolant circuit which can detect the absence of a tool attached for cooling the unit and can then for example uncouple the coolant pump. However, for many types of apparatus, such a solution is too expensive to be practicable.

Of course, the cooling requirement varies also within the group of welding burners with forced cooling. In today's solutions, the cooling unit is therefore dimensioned for the greatest cooling requirement and also delivers this cooling independently of which burner is coupled to the coolant circuit at the time. This leads to unnecessary wear and to troublesome noise.

It has long been known to provide welding tools with identification means, such as a resistance whose value, representing the tool type, has been able to be read off by the welding apparatus to be attached. The welding apparatus has thus been able to adapt, for example, the maximum permissible output in accordance with the tool type. The cooling output too can be adapted in this way, as is described for example in WO 0044523.

A problem with such control of the cooling output is that electrical attachment of a welding burner is in most cases done completely separately from the attachment of the coolant loop. Thus, the identification of such a resistance code, for example, is no guarantee that the cooling output will be of use to the tool, since the cooling tubes may quite simply not be attached. The invention makes available a possibility of verifying that cooling tubes are attached.

### Object of the invention

The object of the invention is to make available a solution to the problem of protecting the cooling unit and/or tool upon alternate attachment of self-cooled tools, and of tools with forced cooling, to the same apparatus, and to make available a method of limiting the wear and noises from the cooling unit upon alternate attachment of tools with different cooling requirements, without the disadvantages inherent to the prior art.

The invention solves the problems in the manner specified in the characterizing clauses of the independent patent claims. Preferred embodiments are described in the dependent patent claims. For example, it is a further advantage, in an apparatus used in processes which generate dust and spatter, to provide the attachments for coolant with a guard which covers the attachment devices when no tool is attached to them. This prevents dirt from later being entrained with the coolant into narrow cooling channels in the tool.

### Brief description of the drawing

Figure 1 shows a complete cooling unit intended for incorporation in a welding machine.
Figure 2 shows an attachment device for attaching a tool to the coolant circuit of a cooling unit according to an embodiment of the invention.
Figure 3 shows the inside (directed toward the cooling unit) of details according to Figure 2.

### Description of preferred embodiments

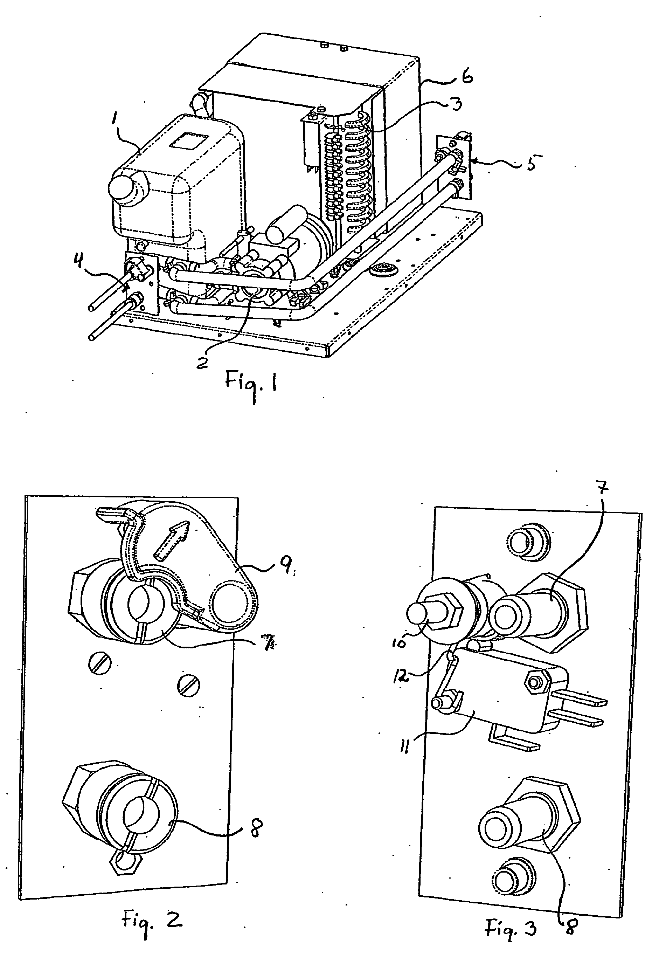

Illustrative embodiments of the invention will now be presented with reference to Figures 1 through 3.

Figure 1 shows a complete cooling unit for a welding machine with coolant tank 1, coolant pump 2, cooler 3, a first attachment unit 4, a second alternative attachment unit 5, fan 6 and flow monitor 14. The attachment units have an embodiment of the invention which is shown more clearly in Figures 2 and 3.

Figure 2 is an attachment unit 4, 5 with supply attachment 7 and return attachment 8 and also a detector unit 9 placed in direct connection to the supply attachment. The resilient detector unit is shown in a position where it has been moved from its rest position in order to provide space for attaching the attachment nipple (not shown) of the tool to the supply attachment. The detector unit has here been provided with a recess matching the tool nipple in order to make it easy to move the detector unit away from its rest position, when it completely or partially covers the opening to the supply attachment, without needing to use more than one hand.

Figure 3 shows the rear face of the attachment unit according to Figure 2, i.e. the face which is directed inward to the cooling unit or the apparatus connected to the latter. The figure shows the detector shaft 10 which supports the detector unit and the spring which gives the detector unit its resilient properties and allows it to rest against the attachment nipple of the tool or the tube so that the angle of rotation is proportional to the nipple/tube diameter and can thus constitute a measure of the cooling output which the attached tool requires. If the cooling requirement is greater, the attachment nipple and/or the tube are thus given greater dimensions.

Measurement of the angle of rotation can be done by a sensor unit (not shown) such as a potentiometer, an optical angle sensor, resolver or the like. The signal from this sensor unit can then be processed in the control device for the cooling output, and the control is thus adapted to the requirement in question. The control can be effected for example by pump and/or fan speed. Instead of measuring the angle of rotation, it is possible, in a similar manner, to measure how far the nipple projects into the supply and/or return attachment. A large nipple cannot be inserted as far into the attachment as a smaller one. This position can also be measured by resistive, optical or inductive means. In this case, capacitive measurement would be preferable. Nipple and attachment device have been assumed to be made of metal, at least one part having a nonconductive covering layer.

The simplest form of output control consists solely of on/off control. The pump and/or fan is either running or not. For this, only a microswitch 11 is needed as signal sensor. An eccentric detector unit activates the microswitch which sends a signal to the control device to start up the components in the cooling unit. It is sometimes also possible to allow the motor current to the pump to be interrupted directly by a switch directly actuated by the eccentric of the detector unit.

Of course, the invention is not limited to welding machines on which the example has been based, and instead the invention applies within the scope of the patent claims.

## Claims

1. An arrangement (9, 10, 11, 12) for controlling the cooling output from a cooling unit, where said cooling unit is connected to an attachment device (7, 8) for attachment of an attachment nipple belonging to one of several attachable tools to be cooled from the cooling unit by means of a coolant flowing through the attachment nipple, and where said arrangement (9, 10, 11, 12) is adapted to be connected in signal terms to a control device for the cooling output, **characterized in that** it is arranged in or in immediate proximity to said attachment device (7, 8), and **in that** it further comprises, on the one hand, means (9) for detecting the presence or absence of the attachment nipple in the attachment device (7, 8) and, on the other hand, means for generating a signal corresponding to the detection result.

2. The arrangement as claimed in claim 1, where the detecting means can further distinguish a size of the attached attachment nipple or a tubing connected to the latter, and the generating means can further generate a signal corresponding to this size.

3. The arrangement as claimed in claim 1 or 2, where the detecting or generating means comprises a resilient element adapted to rest against the tubing or the attachment nipple when the latter is attached to the attachment device.

4. The arrangement as claimed in claim 3, where the resilient element covers the opening of the attachment device when no attachment nipple has been attached.

5. The arrangement as claimed in any of claims 2 through 4, where the means for generating the signal comprises a resistive, inductive, capacitive or optic component.

6. The arrangement as claimed in any of claims 2 through 4, where the means for generating the signal comprises an on/off element (11) such as a microswitch.

7. A cooling unit comprising an attachment device for attachment of one of several attachable tools intended, upon attachment, to be cooled from the cooling unit, **characterized in that** it also comprises an arrangement according to any of claims 1 through 6.

8. An apparatus intended to drive one of several attachable tools, where said tools can have different needs for cooling output, comprising an attachment device for such tools, and further comprising a cooling unit for cooling an attached tool, **characterized in that** it also comprises an arrangement according to any of claims 1 through 6.

9. A welding machine for electric arc welding, intended to be able to provide one of several attachable welding burners with energy for a welding arc, and connected to, on the one hand, an attachment device for such a welding burner and, on the other hand, a cooling unit intended to be able to provide an attached welding burner with the required cooling output, **characterized in that** it is also connected to an arrangement according to any of claims 1 through 6.

10. A wire feeder mechanism for electric arc welding intended to be able to provide one of several attachable welding burners with forwarded welding electrode, and connected, on the one hand, to an attachment device for such a welding burner and, on the other hand, a cooling unit intended to be able to provide an attached welding burner with the required cooling output, **characterized in that** it is also connected to an arrangement according to any of Claims 1 through 6.

## Patentansprüche

1. Anordnung (9, 10, 11, 12) zur Steuerung der Kühlleistung einer Kühleinheit, bei der die Kühleinheit mit einer Anschlusseinrichtung (7, 8) zum Anschließen eines Anschlussnippels verbunden ist, der zu einem von mehreren anschließbaren Werkzeugen gehört, die von der Kühleinheit mittels eines Kühlmittels gekühlt werden sollen, das durch den Anschlussnippel fließt, und wobei die Anordnung (9, 10, 11, 12) dafür vorgesehen ist, durch Signale mit einer Steuerungseinrichtung für die Kühlleistung verbunden zu werden, **dadurch gekennzeichnet, dass** sie in der oder in unmittelbarer Nähe zu der Anschlusseinrichtung (7, 8) angeordnet ist und dass sie weiterhin auf der einen Seite ein Mittel (9) zum Erfassen des Vorhandenseins oder Nichtvorhandenseins des Anschlussnippels in der Anschlusseinrichtung (7, 8) und auf der anderen Seite ein Mittel zum Erzeugen eines Signals, das dem Erfassungsergebnis entspricht, umfasst.

2. Anordnung nach Anspruch 1, bei der das Erfassungsmittel weiterhin eine Größe des angeschlossenen Anschlussnippels oder eines Rohrs, das mit diesem verbunden ist, unterscheiden kann, und dass das Erzeugungsmittel weiterhin ein Signal erzeugen kann, das dieser Größe entspricht.

3. Anordnung nach Anspruch 1 oder 2, bei der das Erfassungs- oder Erzeugungsmittel ein elastisches Element umfasst, das dafür vorgesehen ist, an dem Rohr oder dem Anschlussnippel zu liegen, wenn dieser an die Anschlusseinrichtung angeschlossen ist.

4. Anordnung nach Anspruch 3, bei der das elastische Element die Öffnung der Anschlusseinrichtung bedeckt, wenn kein Anschlussnippel angeschlossen wurde.

5. Anordnung nach einem der Ansprüche 2 bis 4, bei der das Mittel zum Erzeugen des Signals eine Widerstands-, Induktions-, Kapazitäts- oder Optikkomponente umfasst.

6. Anordnung nach einem der Ansprüche 2 bis 4, bei der das Mittel zum Erzeugen des Signals ein Ein/Aus-Element (11) wie einen Mikroschalter umfasst.

7. Kühleinheit, umfassend eine Anschlusseinrichtung zum Anschließen eines oder mehrerer anschließbarer Werkzeuge, die, sobald sie angeschlossen sind, durch die Kühleinheit gekühlt werden sollen, **dadurch gekennzeichnet, dass** sie auch eine Anordnung nach einem der Ansprüche 1 bis 6 umfasst.

8. Vorrichtung zum Antrieb eines von mehreren anschließbaren Werkzeugen, bei der die Werkzeuge unterschiedlichen Bedarf an Kühlleistung haben können, umfassend eine Anschlusseinrichtung für solche Werkzeuge und weiterhin umfassend eine Kühleinheit zum Kühlen eines angeschlossenen Werkzeugs, **dadurch gekennzeichnet, dass** sie auch eine Anordnung nach einem der Ansprüche 1 bis 6 umfasst.

9. Schweißmaschine zum Lichtbogenschweißen, die in der Lage sein soll, einen von mehreren anschließbaren Schweißbrennern mit Energie für einen Schweißlichtbogen zu versorgen, und die auf der einen Seite mit einer Anschlusseinrichtung für einen solchen Schweißbrenner und auf der anderen Seite mit einer Kühleinheit verbunden ist, die in der Lage sein soll, einen angeschlossenen Schweißbrenner mit der erforderlichen Kühlleistung zu versorgen, **dadurch gekennzeichnet, dass** sie auch mit einer Anordnung nach einem der Ansprüche 1 bis 6 verbunden ist.

10. Drahtvorschubmechanismus zum Lichtbogenschweißen, der in der Lage sein soll, einen von mehreren anschließbaren Schweißbrennern mit einer Linksschweißelektrode zu versehen, und der auf der einen Seite mit einer Anschlusseinrichtung für einen solchen Schweißbrenner und auf der anderen Seite mit einer Kühleinheit verbunden ist, die in der Lage sein soll, einen angeschlossenen Schweißbrenner mit der erforderlichen Kühlleistung zu versorgen, **dadurch gekennzeichnet, dass** er auch mit einer Anordnung nach einem der Ansprüche 1 bis 6 verbunden ist.

## Revendications

1. Dispositif (90, 10, 11, 12) de réglage de la puissance de refroidissement d'une unité de refroidissement, dans lequel l'unité de refroidissement est reliée à un dispositif (7, 8) de connexion pour la connexion d'un raccord de connexion appartenant à l'un de plusieurs outils pouvant être connectés, à refroidir par l'unité de refroidissement au moyen d'un réfrigérant passant dans le raccord de connexion, et dans lequel le dispositif (9, 10, 11, 12) est conçu pour être connecté en termes de signal à un dispositif de commande de la puissance de refroidissement, **caractérisé en ce qu'**il est disposé dans le dispositif (7, 8) de connexion ou en sa proximité immédiate et **en ce qu'**il comprend, en outre, d'une part, des moyens (9) de détection de la présence ou de l'absence du raccord de connexion du dispositif (7, 8) de connexion et, d'autre part, des moyens pour produire un signal correspondant au résultat de la détection.

2. Dispositif suivant la revendication 1, dans lequel les moyens de détection peuvent distinguer, en outre, une dimension du raccord de connexion connecté ou une canalisation connectée à ce dernier et les moyens de production peuvent produire, en outre, un signal correspondant à cette dimension.

3. Dispositif suivant la revendication 1 ou 2, dans lequel les moyens de détection ou de production comprennent un élément élastique conçu pour reposer sur la canalisation ou le raccord de connexion lorsque ce dernier est connecté au dispositif de connexion.

4. Dispositif suivant la revendication 3, dans lequel l'élément élastique recouvre l'ouverture du dispositif de connexion lorsqu'un raccord de connexion n'est pas connecté.

5. Dispositif suivant l'une quelconque des revendications 2 à 4, dans lequel les moyens de production du signal comprennent un composant résistif, inductif, capacitif ou optique.

6. Dispositif suivant l'une quelconque des revendications 2 à 4, dans lequel les moyens de production du signal comprennent un élément (11) de marche/arrêt tel qu'un microinterrupteur.

7. Unité de refroidissement comprenant un dispositif de connexion pour connecter l'un de plusieurs outils pouvant être connectés, destinés après connexion, à être refroidis par une unité de refroidissement, **caractérisé en ce qu'**elle comprend aussi un dispositif suivant l'une quelconque des revendications 1 à 6.

8. Installation destinée à commander un de plusieurs outils pouvant être connectés, les outils pouvant avoir des besoins de puissance de refroidissement différents, comprenant un dispositif de connexion pour des outils de ce genre et comprenant, en outre, une unité de refroidissement pour refroidir un outil connecté, **caractérisée en ce qu'**elle comprend, en outre, un dispositif suivant l'une quelconque des revendications 1 à 6.

9. Machine de soudage pour le soudage à l'arc électrique destinée à être en mesure d'alimenter l'un de plusieurs chalumeaux de soudage pouvant être connectés en énergie pour un arc de soudage et connectés, d'une part, à un dispositif de connexion pour un chalumeau de soudage de ce genre et, d'autre part, à une unité de refroidissement destinée à être à même de fournir à un chalumeau de soudage connecté la puissance de refroidissement requise, **caractérisée en ce qu'**elle est connectée aussi à un dispositif suivant l'une quelconque des revendications 1 à 6.

10. Mécanisme d'alimentation en fil métallique pour un soudage à l'arc électrique destiné à être en mesure de fournir à l'un de plusieurs chalumeaux de soudage pouvant être connectés une électrode de soudage avancée et connecté, d'une part, à un dispositif de connexion pour un chalumeau de soudage de ce genre et, d'autre part, à une unité de refroidissement destinée à être en mesure de fournir au chalumeau de soudage connecté la puissance de refroidissement requise, **caractérisé en ce qu'**il est connecté aussi à un dispositif suivant l'une quelconque des revendications 1 à 6.
